# EUROPEAN PATENT APPLICATION

(11) **EP 2 034 630 A1**
(43) Date of publication of application: **11.03.2009**
(21) Application number: 07291083.9
(22) Date of filing: 10.09.2007
(51) Int. Cl.: H04B 7/26

(54) **Synchronization method of an internal clock of a serving element in a wireless communication network**

(71) Applicant: Sequans Communications, 92073 Paris La Défense Cedex (FR)
(72) Inventor: Bazzaz, Paul, 75020 Paris (FR)
(74) Representative: Bentz, Jean-Paul

(57) **Abstract**

Synchronization method of an internal clock of a serving element (SSE) in a wireless communication network according to an external reference clock, comprising at least the steps of:
- receiving (1) an incoming signal comprising at least a synchronization information,
- comparing (2) the synchronization information of the incoming signal with at least one synchronization information stored in the serving element, and
- if at least one of the synchronization information stored in the serving element corresponds to the synchronization information of the incoming signal, estimating (3) a propagation delay of said incoming signal and synchronizing the internal clock according to the estimated propagation delay.

## Description

The present invention pertains to synchronization between devices within a communication network.
More precisely, according to an aspect, the invention relates to a synchronization of an internal clock of a serving element in a wireless communication network according to an external reference clock.
According to another aspect, the invention relates to a serving element of a wireless communication network.

Generally, a wireless communication network comprises a plurality of mobile stations and a plurality of static (or stationary) stations. The mobile devices are for instance subscriber stations or user terminals. The static devices, also called serving elements, are for instance base stations or relay stations to which the mobile stations can be connected in order to receive and to transmit information such as data or voice.

The serving elements need to be synchronized in frequency and/or in time, for network deployment, handover support and synchronous communication with the mobile stations.
One common scheme to ensure such synchronization is to use of a Global Positioning System (or GPS) receiver typically embedded in a serving element. Another scheme is to use a synchronization signal coming from a backbone network. But these schemes have several disadvantages. Indeed, the use of a GPS receiver or the use of a direct connection with a backbone network requires additional costs, and the installation of a GPS antenna is complex especially when the antenna is the only outdoor component to be connected through a long cable. Moreover, using the backbone network for synchronisation may induce some degradation in term of unwanted and harmful jitter due to the nature of the backbone which is typically packet switched network.

An object of the invention is to propose an alternate synchronization method reducing the aforementioned limitations.

For this purpose, an object of the invention is to provide a synchronization method of an internal clock of a serving element in a wireless communication network, according to an external reference clock.
The synchronization method of the invention is mainly characterized in that it comprises at least the steps of:
- receiving an incoming signal comprising at least a synchronization information,
- comparing the synchronization information of the incoming signal with at least one synchronization information stored in the serving element, and
- if at least one of the synchronization information stored in the serving element corresponds to the synchronization information of the incoming signal, estimating a propagation delay of said incoming signal and synchronizing the internal clock according to the estimated propagation delay.

Thus, the cost of the serving elements (for example base stations, relay stations, access points, or gateways) can be reduced in comparison to a classical synchronisation method of the prior art, the use of a GPS antenna is not necessary, and the timing accuracy of the synchronisation can be improved (the serving elements being able to update their synchronization loop up to once per frame which typical duration is in the order of milliseconds instead of once per second).

The incoming signal may be sent by a synchronized serving element of the wireless communication network, said synchronized serving element being synchronized with the external reference clock directly or via another synchronized serving element of the wireless communication network.

The synchronization information may be a pre-defined pattern, for example an identification information of the synchronized serving element on which the serving element is allowed to synchronized on.

Preferably, the serving element stores synchronization information of a plurality of synchronized serving elements of the wireless communication network on which the serving element is allowed to synchronized on.

The synchronization information may be updated according to the synchronized serving elements of the network.

Preferably, the external reference clock is a clock of a Global Positioning System (GPS) receiver, said Global Positioning System receiver outputting a pulse once a second.

Preferably, the synchronization information is periodically sent on the wireless network.

In a particular embodiment, the step of estimating the propagation delay may comprise the steps of:
- detecting a first occurrence of receiving a signal sent by the Global Positioning System receiver,
- detecting a second occurrence of receiving a preamble symbol of a signal sent by the synchronized serving element which has sent said incoming signal,
- determining the difference between the first and the second occurrences,
- determining the propagation delay according to this difference, and
- storing this propagation delay internally for use in the synchronization method.

In another particular embodiment, the step of estimating the time propagation delay may comprise the steps of:
- receiving a first specific signal from the synchronized serving element which has sent the incoming signal, said first specific signal comprising a sending time information,
- sending a response signal to the synchronized serving element at said sending time,
- receiving a second specific signal from the synchronized serving element, said second specific signal comprising the propagation delay information, said propagation delay being determined by the synchronized serving element from the sending time information and the reception time of the response signal, and
- storing this propagation delay internally for use in the synchronization method.

In another particular embodiment, the step of estimating the time propagation delay comprises the steps of:
- receiving, at a same time, at least four preambles of four different synchronized serving elements of the network,
- performing triangulation method to determine the position of the serving element and the propagation time delay between the serving element and the synchronized serving element which has sent the incoming signal, and
- storing this propagation delay internally for use in the synchronization method.

The synchronization method may further comprise the step of:
- determining a frame number information from the signal sent by the synchronized serving element, and
- synchronizing an internal counter of the serving element according to the frame number information.

For instance, the serving element receives signals sent by the synchronized serving element on one antenna used for transmitting signals towards the network.

Preferably, the serving element receives signals sent by the synchronized serving element on a first antenna, and transmits simultaneously signals towards the network on a second antenna.

Advantageously, the synchronization method is performed as soon as the serving element is powered on.

Another object of the invention is to provide a serving element of a wireless communication network, comprising at least an internal clock and means for performing the synchronization method described above.

The serving element may further comprise means for receiving and processing a signal sent by a Global Positioning System receiver.

The serving element may further comprise means for performing a handshake protocol with the synchronized serving element with which the serving element is estimating the propagation delay.

The serving element may further comprise means for performing triangulation method.

Other features and advantages of the invention will appear more clearly from the description of a particular embodiment of the invention made hereinafter, as an indication and by no means restrictive, with reference to the accompanying drawings, wherein:
- Figure 1 shows an example of a network layout composed of a plurality of serving elements;
- Figure 2 shows a frame structure of a 802.16e signal;
- Figure 3 shows the OFDMA PHY Synchronisation Field (PSF) used in 802.16e systems;
- Figure 4 is a block diagram of a typical serving element implementing the 802.16e standard according to a particular embodiment of the invention;
- Figure 5 is a simplified high level block diagram of a serving element according to a particular embodiment the invention;
- Figure 6 is timing diagrams of the control of a serving element according to a particular embodiment of the invention; and
- Figure 7 is a simplified block diagram of the synchronization method according to the invention.

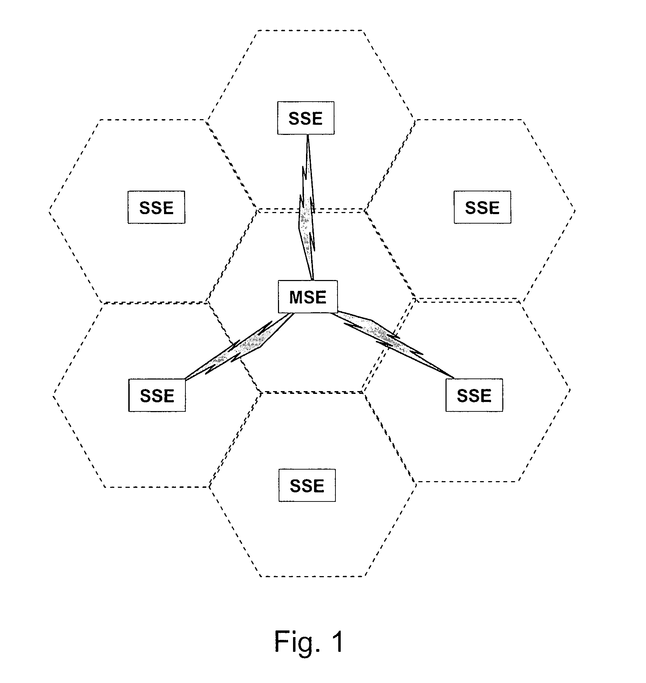

In a wireless communication network, serving elements are deployed geographically such as to cover an area of a given size and given geometry, as shown in figure 1.
A serving element is a static station which mobile stations are in communication with. For instance, a serving element can be a relay station, an access point, a residential gateway, or more generally any device that serves terminals through an air interface.
The "air interface" term covers a radio channel that is used for exchanging information in the communication network, between terminals and serving elements of the network. So, though a communication using Global Positioning System (or GPS) uses an "air medium", it is not covered by the "air interface" term. Note that a serving element may have several air interfaces, for instance one for WiMAX (World Interoperability for Microwave Access) transmission technique and another for LTE (Long Term Evolution) transmission technique.

In the following, a serving element which is already synchronized is called synchronized serving element or master serving element and noted MSE, and a serving element which is not synchronized is simply called serving element or slave serving element and noted SSE. Thus, the network is composed of synchronized serving elements MSE, and of serving elements SSE.

When said synchronized serving element MSE is constantly connected to an embedded Global Positioning (GPS) receiver, the synchronized serving element MSE of the network could have been directly synchronized with an external reference clock according to a prior art synchronization method using a GPS receiver, the external reference clock being the clock of the GPS receiver, and the GPS receiver typically outputting a pulse once a second, noted 1PPS.
The synchronized serving element MSE could also have been synchronized with the external reference clock via another synchronized serving element MSE of the network, according to the synchronized method of the invention, particularly when the synchronized serving element MSE is not constantly connected to an embedded GPS receiver.

Typically, the synchronized serving elements MSE send air interface signal carrying specific training data used by the terminals for synchronization.
The invention proposes to take advantage of this air interface signal in order to synchronize the serving element SSE of the network. Thus, instead of using signal sent by the GPS receiver or the backbone network, the serving elements SSE could synchronize their internal clock by using air interface signal sent by synchronized serving elements of the wireless communication network.
The serving elements SSE can use a specific training data as synchronization information, said training data being carried by an air interface signal sent by all or a part of the synchronized serving elements MSE. This synchronization information can also be transmitted periodically. Advantageously, the synchronization information is sent by the different synchronized serving elements MSE at a same absolute time, particularly if the synchronized serving elements MSE embed more than one antenna.
A serving element SSE which is not synchronized may not be allowed to transmit any signal towards the network.

Afterward, a particular embodiment of the invention will be explained by using the WiMAX standard. Moreover, we will consider the worst case where all the serving elements of the network shall send periodically the synchronisation data at the same absolute time. This particular embodiment shall not be understood as a restriction of the invention to this field of application nor a constraint for the network deployment, but rather give a practical, detailed and most complex example. Indeed, the invention can be used in other standard as well, based or not on OFDMA (Orthogonal Frequency Division Access) technique.

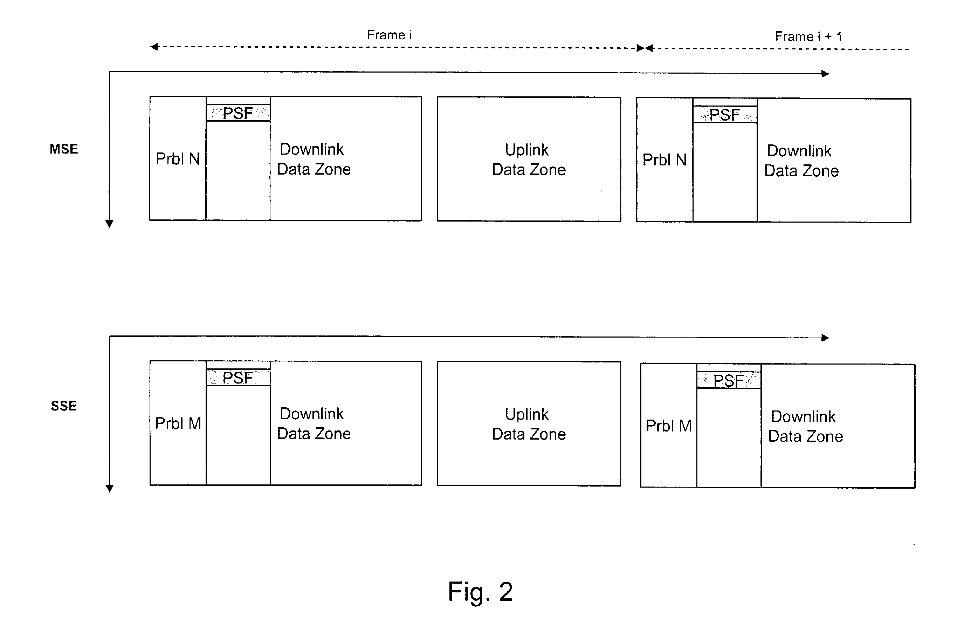

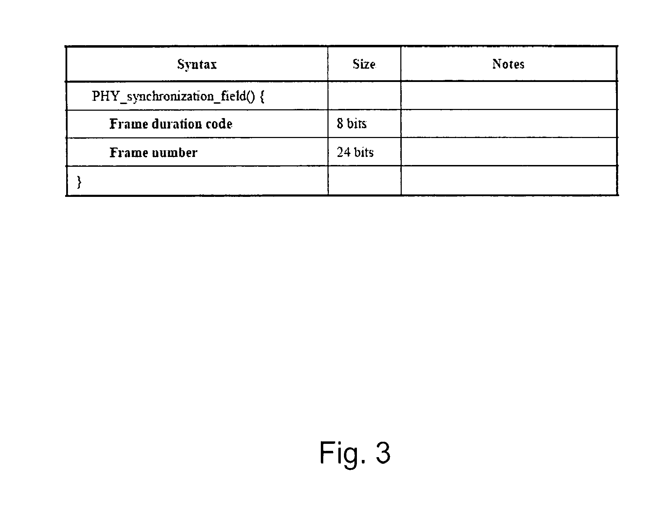

In WiMAX (or 802.16e standard) communication network, the signal sent on the air interface by a synchronized serving element MSE towards the network contains from time to time training data used by the mobile stations for frequency and time synchronization. These training data may be transmitted periodically, and can be a pre-defined pattern used by the serving elements SSE as synchronization information.
Air interface signal sent by a synchronized serving element MSE according to WiMAX standard comprises successive frames, as shown in figure 2, and it is usual that these frames are of the same duration, a frame duration being known. The frames are typically numbered (for example frame number i and i+1 in figure 2), the frame number being coded over n bits, and the frame numbering being hence periodic modulo 2n. The frame is divided into two parts: downlink part (or downlink sub-frame) preceding the uplink part (or uplink sub-part). It is also usual that so-called preambles (type of OFDMA symbol of the frame) are transmitted at the beginning part of each downlink frame. Moreover, there are 114 different values of preamble allowing defining a cellular pattern where neighboring base stations are differentiated by their preambles. For example, figure 2 shows a preamble N, noted Prbl N, is transmitted by a synchronized serving element MSE while the serving element SSE transmits preamble M, noted Prbl M.
Last, according to WiMAX standard, the second OFDMA symbol of the downlink frame contains the so-called PHY Synchronization Field, noted PSF. As further shown in figure 3, the PSF consists of the frame time duration information and the frame number. The PSF is hence used by the terminals in order to retrieve frame number information, and to synchronize their internal frame counters according to this frame number information. This PSF can be used by the serving elementd SSE to synchronize their internal frames counter. Thus, all the serving elements can transmit the frame i at the same time or at least the frame numbering can not be randomly initialized in any of the serving elements.

Thus, in this particular network, the serving element SSE can be synchronized to the external reference clock by using the preamble and the PSF sent by the synchronized serving element MSE in the neighbourhood, instead of using a GPS receiver embedded in the serving element SSE. The serving element SSE will typically receive this synchronisation information from the neighbouring synchronized serving element MSE above its reception sensitivity level.

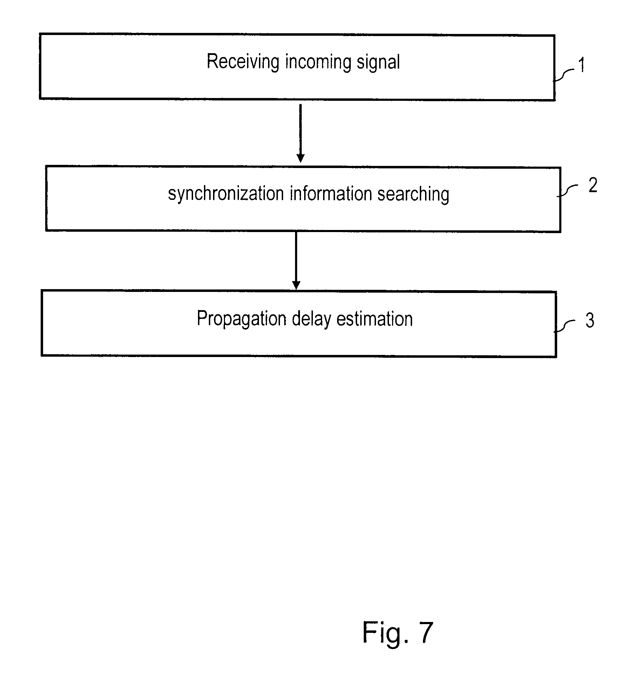

According to the invention, as shown in figure 7, the synchronization method of an internal clock of a serving element SSE to an external reference clock comprises at least the steps of:
- receiving (1) an incoming signal comprising at least a synchronization information,
- comparing (2) the synchronization information of the incoming signal with at least one synchronization information stored in the serving element, and
- if at least one of the synchronization information stored in the serving element corresponds to the synchronization information of the incoming signal, estimating (3) a propagation delay of said incoming signal and synchronizing the internal clock according to the estimated propagation delay.
   Preferably, the incoming signal is sent by a synchronized serving element MSE of the wireless communication network. The synchronized serving element MSE can be directly synchronized with the external reference clock or synchronized via another synchronized serving element of the wireless communication network.
   Preferably, the external reference clock is a clock of a GPS receiver outputting a pulse once a second.
   This synchronization method may be done as soon as the serving element SSE is powered on.

For example, to be sure that the serving element SSE synchronizes on the correct synchronization information transmitted from an already synchronized serving element MSE, during a first phase, the serving element SSE would have to search for the occurrence of a synchronization information carried by the incoming signal. The synchronization information is for example a given pre-defined pattern such as a preamble value (prbl N) which may correspond to identification information relative to the synchronized serving element MSE which has transmitted the incoming signal.
This first phase may indicate to the serving element SSE that the incoming signal is sent by a synchronized serving element MSE which the serving element SSE is allowed to synchronize with.
The serving element SSE may store synchronization information of a plurality of synchronized serving elements of the wireless communication network on which the serving element is allowed to synchronize with. As a serving element SSE becomes a synchronized serving element MSE after performing the synchronization method, and thus can be used by another serving element SSE for synchronization, the synchronization information stored in the serving elements SSE of the network may be updated accordingly, based on link budget for instance.
The synchronized serving elements MSE may be identified by their unique identification number (also called BS_Id in WiMAX standard) that are used as well for other purposes like handover. The serving element SSE may store internally a list of MSE identification numbers, and hence, the serving element SSE may know which synchronized serving element MSE can be used for synchronisation purpose. Based on the MSE unique identification number, the serving element SSE will do the correspondence with the received synchronisation information. For instance, considering WiMAX standard, the serving element SSE would do the correspondence between the MSE identification number and the preamble index. To do so, during the network set-up, the serving element SSE may scan alternatively the neighbour synchronized serving elements, decode their preamble, synchronises on each of them, decodes their BS_Id, checks if the BS_Id corresponds to a synchronized serving element MSE (for example from the internal list), and stores internally preamble index of the synchronized serving element MSE only, for synchronisation purpose.

After this first phase is done, during a second phase, the serving element SSE would have to be informed of the propagation delay between the serving element SSE and the corresponding synchronized serving element MSE. The internal clock of the serving element SSE can then be synchronized according to this propagation delay information. This propagation delay information needs to be accurate.

Three solutions for determining the propagation delay will be presented below as examples and are not restrictive.

A first solution may consist of using an external GPS receiver along with a connection with the serving element SSE. The SSE will hence have an internal signal indicating the arrival of the synchronized serving element MSE preamble and the signal of the external GPS receiver (typically a pulse once a second). The serving element SSE is then able to measure the propagation delay and store it internally.
For instance, for determining the propagation delay, the serving element SSE may perform the steps of:
- detecting a first occurrence of receiving a signal sent by the GPS receiver,
- detecting a second occurrence of receiving a preamble symbol of a signal sent by the synchronized serving element MSE which the serving element SSE is allowed to synchronized with,
- determining the difference between the first and the second occurrences,
- determining the propagation delay according to this difference, and
- storing this propagation delay internally for use in the synchronization method.

A second solution may consist in establishing a protocol between the synchronized serving element MSE and the serving element SSE. Once the serving element SSE has detected the arrival time of the preamble, it sends a specific message to the MSE at a known and agreed on instant. The MSE is then able to respond with a timing correction so as to make the SSE aligned with the 1pps modulo the frame duration.
For instance, for determining the propagation delay, serving element SSE may perform the steps of:
- receiving a first specific signal from the synchronized serving element MSE which has sent the incoming signal, said first specific signal comprising a sending time information,
- sending a response signal to the synchronized serving element at said sending time,
- receiving a second specific signal from the synchronized serving element MSE, said second specific signal comprising the propagation delay information, said propagation delay being determined by the synchronized serving element MSE from the sending time information and the reception time of the response signal, and
- storing this propagation delay internally for use in the synchronization method.

A third solution may consist in using a triangulation method.
For instance, for determining the propagation delay, serving element SSE may perform the steps of:
- receiving, at a same time, at least four preambles of four different synchronized serving elements MSE of the network,
- performing triangulation method to determine the position of the serving element SSE and the propagation time delay between the serving element SSE and the synchronized serving element MSE which has sent the incoming signal, and
- storing this propagation delay internally for use in the synchronization method.

The serving element SSE can also perform a timing calibration consists of a modulo frame duration timing alignment. This timing calibration consists furthermore in the knowledge of the frame numbering, modulo 2ⁿ (in 802.16e, n=24). This can be easily done by decoding the frame number field of the PSF by the serving element SSE. The distance between the serving element SSE and the synchronized serving element MSE is such as there would be no ambiguity in this information.

Another object of the invention concerns a serving element SSE which may comprise an internal clock, means for performing the synchronization method described above, means for receiving and processing a signal sent by a GPS receiver, means for performing a handshake protocol with the synchronized serving element MSE with which the serving element SSE is estimating the propagation delay, and means for performing triangulation method.

In worst configuration, where all the serving elements have to send synchronisation information at the same absolute time, the invention can be used more efficiently in serving elements that naturally would have more than one antenna and processing chain. This is nowadays the typical case of all the serving elements of a wireless or mobile network. In a 802.16e system, the downlink sub-frame always begins with a preamble, followed by a FCH symbol that carries the PSF information and then followed by a mandatory first zone carrying at least the so-called DL-MAP. The signal carrying these information (preamble, FCH and DL-MAP) is always transmitted through a single antenna, leaving unused the other antennas. In other words, there is no beamforming, nor MIMO (Multiple-Input Multiple-Output) processing on the preamble, FCH and this primary zone. This is the case considered as example and described hereafter.

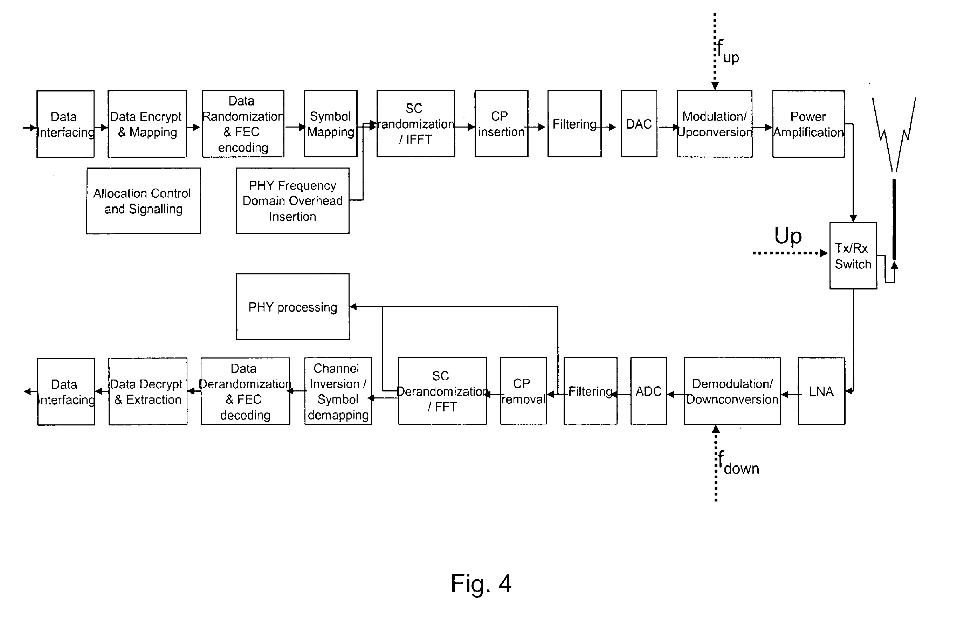

The figure 4 gives an example of a logical block diagram of a typical mono antenna serving element implementing the 802.16e standard. The block diagram covers the Base Band (BB) processing and the Radio Frequency (RF) processing.
Typically, in the transmission direction, payload data are received from the backbone network, packetized, encrypted and mapped over the subcarriers. The bitstream generated by such process is then multiplexed with overhead, like pilots, preambles and PSF. An Inverse Fourier Transform IFFT is then performed over the subcarriers, and a cyclic prefix CP is inserted which aims is to absorb multipath delays. After digital to analog conversion DAC, the signal is modulated in order to be up-converted from base band to radio frequency around the frequency fup carrier value. After amplification, the signal is fed to a switch (TX/Rx Switch) which aim is to select the connection between transmission or the reception path and the antenna. In the reception direction, the signal is received from the antenna and fed to the radio frequency down conversion through the switch and the Low Noise Amplifier (LNA). The signal is then processed by the base band and the payload decoded.

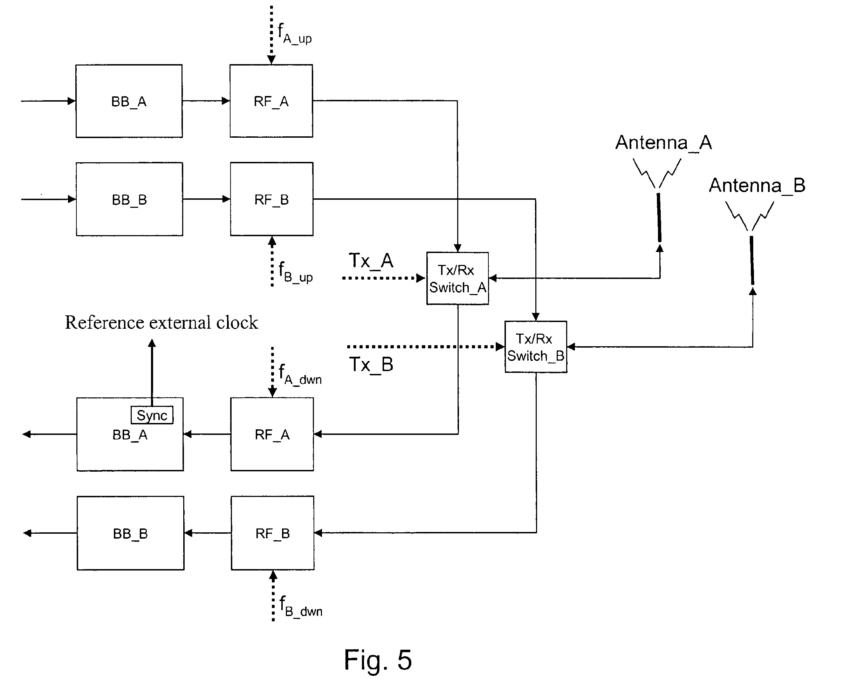

Figure 5 shows an example of a simplified high level block diagram of a slave serving element SSE. In this figure, the slave serving element SSE is considered as having two antennas, as it is easy to derive the solution for more than two antenna SSE. On this figure, one path is denoted A and the other is denoted B. On each path, there are the corresponding base station part (BB_A, BB_B) and the corresponding radio frequency part (RF_A, RF_B), the corresponding switch for transmission and reception (Tx/Rx switch_A, Tx/Rx switch_B), and the corresponding antenna (antenna_A, antenna_B). The different control signals that are shown are the carrier frequency tuning signal (fA_dwn, fB_dwn) for downlink and the same for uplink (fA_up, fB_up), and the signals that control the switches (Tx_A, Tx_B).

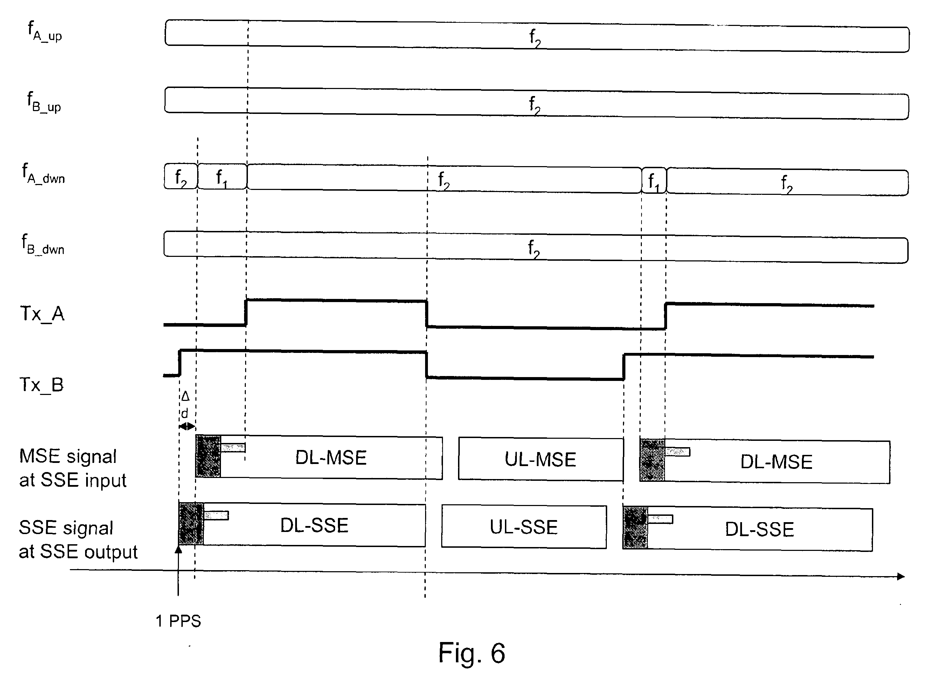

Figure 6 shows a timing diagram for these control signals based on the 1pps signal and on the MSE signal received by the SSE, which from a timing perspective, corresponds to the relative position of the MSE and SSE. In this figure, we consider that the SSE uses synchronization information from one MSE only, as this is enough for the SSE to perform correct synchronization. However, it is very easy to generalize the situation to a SSE receiving synchronisation data from more than one MSE. Indeed, if needed, the SSE can scan periodically different MSE from a set of MSE, at a maximum rate of one MSE per frame. In figure 6a, the following is assumed:
- A TDD (Time division) duplexing mode;
- The MSE transmits on carrier frequency f1;
- The SSE transmits on carrier frequency f2;
- Antenna_A of SSE is used for receiving the synchronisation information from MSE;
- Antenna B of SSE is used for transmission of SSE preamble and first mandatory single antenna zone; and
- Antenna_A and antenna_B are used for MIMO or beamforming zone eventually following the first mandatory single antenna zone.
   As shown in this figure, the frame, composed by the downlink sub-frame and the uplink sub-frame, is transmitted by the MSE and the SSE (UL-MSE, DL-MSE, UL-SSE, DL-SSE), in phase with the absolute 1PPS signal. This timing alignment is done directly by receiving the 1 PPS signal from the GPS module for the MSE, while this alignment is the result of synchronisation process of the SSE on the synchronisation information from the MSE. The MSE frame is received by the SSE after a delay, noted Δ, corresponding to their relative distance, noted d. In normal tracking operation, the SSE switches Tx_A and Tx_B and loads carrier frequency f1 and f2 in the tuners such as:

- to receive the synchronisation information from MSE during a corresponding expected timing window, and
- to transmit frame starting from the 1 PPS signal, modulo frame duration.

## Claims

1. Synchronization method of an internal clock of a serving element (SSE) in a wireless communication network according to an external reference clock, comprising at least the steps of:
- receiving (1) an incoming signal comprising at least a synchronization information,
- comparing (2) the synchronization information of the incoming signal with at least one synchronization information stored in the serving element, and
- if at least one of the synchronization information stored in the serving element corresponds to the synchronization information of the incoming signal, estimating (3) a propagation delay of said incoming signal and synchronizing the internal clock according to the estimated propagation delay.

2. Synchronization method according to claim 1, wherein said incoming signal are sent by a synchronized serving element (MSE) of the wireless communication network, said synchronized serving element (MSE) being synchronized with the external reference clock directly or via another synchronized serving element of the wireless communication network.

3. Synchronization method according to claim 1 or 2, wherein the synchronization information is a pre-defined pattern.

4. Synchronization method according to one of the claims 1 to 3, wherein the synchronization information is an identification information of the synchronized serving element (MSE) on which the serving element (SE) is allowed to synchronized on.

5. Synchronization method according to one of the claims 1 to 4, wherein the serving element (SSE) stores synchronization information of a plurality of synchronized serving elements (MSE) of the wireless communication network on which the serving element (SSE) is allowed to synchronized on.

6. Synchronization method according to one of the claims 1 to 5, wherein said synchronization information being updated according to synchronized serving elements of the network.

7. Synchronization method according to one of the claims 1 to 6, wherein the external reference clock is a clock of a Global Positioning System (GPS) receiver, said Global Positioning System receiver outputting a pulse once a second.

8. Synchronization method according to one of the claims 1 to 7, wherein the synchronization information is periodically sent on the wireless network.

9. Synchronization method according to one of the claims 1 to 8, wherein the step of estimating the propagation delay comprises the steps of:
- detecting a first occurrence of receiving a signal sent by the Global Positioning System (GPS) receiver,
- detecting a second occurrence of receiving a preamble symbol of a signal sent by the synchronized serving element (MSE) which has sent said incoming signal,
- determining the difference between the first and the second occurrences,
- determining the propagation delay according to this difference, and
- storing this propagation delay internally for use in the synchronization method.

10. Synchronization method according to one of the claims 1 to 8, wherein the step of estimating the time propagation delay comprises the steps of:
- receiving a first specific signal from the synchronized serving element (MSE) which has sent the incoming signal, said first specific signal comprising a sending time information,
- sending a response signal to the synchronized serving element (MSE) at said sending time,
- receiving a second specific signal from the synchronized serving element (MSE), said second specific signal comprising the propagation delay information, said propagation delay being determined by the synchronized serving element (MSE) from the sending time information and the reception time of the response signal, and
- storing this propagation delay internally for use in the synchronization method.

11. Synchronization method according to one of the claims 1 to 8, wherein the step of estimating the time propagation delay comprises the steps of:
- receiving, at a same time, at least four preambles of four different synchronized serving elements of the network,
- performing triangulation method to determine the position of the serving element and the propagation time delay between the serving element and the synchronized serving element which has sent the incoming signal, and
- storing this propagation delay internally for use in the synchronization method.

12. Synchronization method according to one of the claims 1 to 11, wherein it further comprises the step of:
- determining a frame number information from the signal sent by the synchronized serving element (MSE), and
- synchronizing an internal counter of the serving element (SSE) according to the frame number information.

13. Synchronization method according to one of the claims 1 to 12, wherein the serving element receives signals sent by the synchronized serving element (MSE) on one antenna used for transmitting signals towards the network.

14. Synchronization method according to one of the claims 1 to 12, wherein the serving element (SSE) receives signals sent by the synchronized serving element on a first antenna, and transmits simultaneously signals towards the network on a second antenna.

15. Synchronization method according to one of the claims 1 to 14, wherein it is performed as soon as the serving element (SSE) is powered on.

16. Serving element (SSE) of a wireless communication network, comprising at least an internal clock and means for performing the synchronization method according to one of the claims 1 to 15.
